# EUROPEAN PATENT APPLICATION

(11) **EP 2 236 694 A1**
(43) Date of publication of application: **06.10.2010**
(21) Application number: 09156106.8
(22) Date of filing: 25.03.2009
(51) Int. Cl.: E04F 15/02, F16B 5/00

(54) **A fastening system and a panel**

(71) Applicant: Spanolux N.V.- DIV. Balterio, 8710 Sint-Baafs-Vijve (BE)
(72) Inventor: De Rick, Jan Eddy, 9500 Geraardsbergen (BE); Vermeulen, Bruno Paul Louis, 3680 Aldeneik-Maaseik (BE)
(74) Representative: Zonneveld, Hendrik Jan

(57) **Abstract**

A fastening system for fastening two panels (13, 17) to each other comprises a first panel (13) having a first edge (14) including an undercut (15) which accommodates a fastening member (1, 33), and a second panel (17) having a second edge (18) including a locking region (19). The first and second edges (14, 18) are positioned adjacent to each other when the panels (13, 17) are fastened to each other by means of the fastening system. The fastening member (1, 33) comprises a displaceable activating portion (2) and a locking portion (3) which is displaceable with respect to the first panel (13) by means of rotation about a pivoting axis upon displacement of the activating portion (2) such that the locking portion (3) engages the locking region (19) of the second panel (17) when the panels (13, 17) are fastened to each other by means of the fastening system. The pivoting axis is spaced from a wall of the undercut (15).

## Description

The present invention relates to a fastening system for fastening two panels to each other, comprising a first panel having a first edge including an undercut which accommodates a fastening member, a second panel having a second edge including a locking region, wherein the first and second edges are positioned adjacent to each other when the panels are fastened to each other by means of the fastening system, the fastening member comprising a displaceable activating portion and a locking portion which is displaceable with respect to the first panel by means of rotation about a pivoting axis upon displacement of the activating portion such that the locking portion engages the locking region of the second panel when the panels are fastened to each other by means of the fastening system.

Such a fastening system is known from WO 2007/008139, which discloses a joint wherein a moveable locking element is arranged in a space which is created by an undercut in an edge of a panel. The locking element is tiltable within the undercut such that upon fastening two panels to each other the locking element is tilted and the locking tongue thereof is displaced into a groove of the panel opposite to the panel including the undercut.

The present invention aims to provide an improved fastening system.

For this purpose the pivoting axis is spaced from a wall of the undercut.

This means that the pivoting axis is free from the wall of the undercut of the first panel. This provides the opportunity to select a favourable position of the pivoting axis. For example, the pivoting axis can be selected in a free space halfway between an upper and lower side of the first panel, which means that the position of the locking portion with respect to the pivoting axis is relatively close-by, resulting in a relatively strongly curved path to be followed by the locking portion upon displacement thereof. This may be useful for clamping onto the locking region of the second panel in a certain direction.

The activating portion may also be displaceable by means of rotation about the pivoting axis, which provides the opportunity to integrate the activation portion and the locking portion in a single piece.

In a specific embodiment the activating portion and the locking portion are part of a rotatable element, which is rotatable within the undercut, wherein the outer circumference of the rotatable element comprises a free space between the activating portion and the locking portion in circumferential direction of the rotatable element for receiving the locking region of the second panel and a second lower lip portion of the second panel for engaging the activating portion. The second panel may be provided with a tooth of which one side comprises the locking portion and the opposite side comprises the second lower lip portion, which tooth fits into the free space.

More particularly the undercut and the rotatable element may have a substantially part-circular cross-section. The advantage of this embodiment is that it can be a relatively simple configuration since one end of the rotatable element at the free space in the part-circular shaped element can be used as activating portion whereas the other end can be used as the locking portion allowing to clamp a part of the second panel between the activating portion and the locking portion. A further advantage of the substantially part-circular cross-section of the undercut is that the risk of easily removing of the fastening member from the undercut during handling of the first panel is minimized. This means that the part-circular cross-section of the undercut can also be applied in the previous embodiment. It is noted that in this embodiment the undercut can be manufactured by means of removing relatively little material to accommodate the rotatable element when compared to the system according to the prior art as mentioned above, which requires sufficient space between the movable locking element and the wall of the undercut in order to allow displacement of the moveable locking element with respect to the wall of the undercut.

The fastening system may be provided with holding means for holding the rotatable element with respect to the first panel. This means that the rotatable element can be fixed with respect to the first panel such that the second panel maintains a fixed position with respect to the first panel. In a preferred embodiment the holding means is resilient and adapted such that the rotatable element can be decoupled with respect to the first panel upon exerting a predetermined force onto the locking portion or the activating portion.

The holding means may comprise a resilient protrusion mounted to the first panel and a recess in the rotatable element for receiving said protrusion, which protrusion is disposed at a location along the path being followed by the recess upon rotation of the rotatable element, or the holding means comprises a resilient protrusion mounted to the rotatable element and a recess in the first panel for receiving said protrusion, which recess is disposed at a location along the path being followed by the protrusion upon rotation of the rotatable element. Nevertheless, an alternative holding means is conceivable.

The rotatable element may have a torsion resiliency, wherein the holding means comprise at least two holding locations for holding the rotatable element with respect to the first panel, which holding locations are disposed at a distance from each other as seen along the pivoting axis. This provides the opportunity to move the locking portion to the locking region of the second panel at a first holding location whereas the displacement of the locking portion at a second location is still limited or zero. This avoids the possibility of displacing the locking portion to the locking region earlier than desired, for example when moving down the second panel with respect to the first panel such that during that motion the second edge is tilted within a vertical plane towards a position parallel to the first edge.

In a preferred embodiment the activating portion is intended to be contacted by the second panel upon moving down the second panel with respect to the first panel and the locking portion is intended to fasten the first and second panels with respect to each other at least perpendicularly to an upper face of the panels. This means that in practice the first and second panels can be fixed to each other by means of a substantially vertical relative motion, wherein the second panel fastens itself to the first panel.

In an alternative embodiment the pivoting axis extends transversely with respect to an upper face of the panel. This facilitates the use of space for locating a transmission between the locking portion and the activating portion along the edge of a panel such that the thickness of the panel can be minimized.

The invention also relates to a fastening system for fastening two panels to each other, comprising a first panel having a first edge including an undercut which accommodates a fastening member, a second panel having a second edge including a locking region, wherein the first and second edges are positioned adjacent to each other when the panels are fastened to each other by means of the fastening system, the fastening member comprising a displaceable activating portion and a locking portion which is displaceable with respect to the first panel upon displacement of the activating portion such that the locking portion engages the locking region of the second panel when the panels are fastened to each other by means of the fastening system, wherein the activating portion is spaced from the locking portion in a direction substantially parallel to the first edge and the upper face of the first panel. This embodiment of the fastening system has similar advantages as described hereinbefore.

The fastening member may comprise a lever which has a pivoting axis extending transversely with respect to an upper face of the panel, wherein the locking portion and the activating portion are provided on the lever at opposite sides of the pivoting axis. Due to this feature the locking portion can be moved in opposite direction with respect to the activating portion. In a preferred embodiment the pivoting axis extends substantially perpendicularly to an upper face of the first panel. Preferably, the distance between the activating portion and the locking portion is relatively small so as to avoid that the locking portion is displaced below the second panel when the second edge is tilted within a vertical plane and moved downwards with respect to the first panel towards a position parallel to the first edge. The distance between the activating portion and the locking portion may be smaller than the length of the lever, for example.

The invention also relates to a fastening system for fastening two panels to each other, comprising a first panel having a first edge including an undercut which accommodates a fastening member, a second panel having a second edge including a locking region, wherein the first and second edges are positioned adjacent to each other when the panels are fastened to each other by means of the fastening system, the fastening member being a rotatable element provided with an activating portion and a locking portion, which rotatable element is rotatable within the undercut about a pivoting axis upon displacement of the activating portion such that the locking portion engages the locking region of the second panel when the panels are fastened to each other by means of the fastening system, and the pivoting axis extends substantially parallel to the undercut and is spaced from a wall of the undercut.

The invention also relates to a panel having an edge including an undercut which accommodates a fastening member for fastening the panel to another panel, wherein the fastening member comprises a displaceable activating portion and a locking portion which is displaceable with respect to the panel upon displacement of the activating portion, and the activating portion is spaced from the locking portion in a direction parallel to the edge, or wherein the fastening member comprises a displaceable activating portion and a locking portion which is spaced from the activating portion and displaceable with respect to the panel by means of rotation about a pivoting axis upon displacement of the activating portion, wherein the pivoting axis is spaced from a wall of the undercut.

It is noted that EP 1 650 375 is related to a mechanical locking system for floor panels. The system comprises a flexible tongue in a sliding groove and is adapted such that two adjacent panels are attached to each other by means of vertical folding. During the vertical folding the flexible tongue is displaced twice in the sliding groove. This may create frictional forces which is avoided in the system according to the present invention. Furthermore, the system according to the invention actively displaces the locking portion from the first panel to the second panel upon activating the activating portion, whereas in the prior art system the locking portion is first moved into the first panel and then moved back from the first panel in the direction of the second panel due to a spring force. This increases the risk that the flexible tongue may get stuck in the sliding groove.

The invention will hereafter be elucidated with reference to the very schematic drawings showing embodiments of the invention by way of example.
Figs. 1a-1f are perspective views of different embodiments of a fastening system according to the invention.
Figs. 2a-2b are plan views of a part of the embodiment according to Fig. 1a in non-activated condition and activated condition, respectively; Fig. 2c is a perspective view of a part of the embodiment of Fig. 1 for illustrating dimensions of the fastening member and Fig. 2d is a front view of the fastening member.
Figs. 3a-3f are cross-sectional views of the fastening system according to the invention, illustrating different steps during a fastening process of two panels.
Fig. 4 is a perspective view of two panels just before fastening them to each other by means of the fastening system according to the invention.
Fig. 5a is a cross-sectional view of a part of an embodiment of a first panel during a manufacturing step thereof and Fig. 5b is a similar view as Fig. 5a of the resulting first panel; Figs. 5c-d are similar views as Fig. 5a-b, respectively, but showing a manufacturing step of the second panel; Figs. 5e-f are similar views as Fig. 5a, respectively, but showing alternative manufacturing steps of the first panel.
Fig. 6a is a cross-sectional view of an embodiment of a panel having a first edge and a second edge, Fig. 6b is a similar view as Fig. 6a showing the panel including the fastening member and Fig. 6c is a plan view of the embodiment of Figs. 6a-b.
Fig. 7a is a similar view as Fig. 6c showing an alternative embodiment of a panel, and Figs. 7b-c are sectional views along the lines VIIb-VIIb and VIIc-VIIc in Fig. 7a, respectively.
Figs. 8a-c are similar views as Fig. 6c of alternative embodiments of the panel.
Figs. 9a-b are plan views of different combinations of panels which form a part of a floor.
Fig. 10 is a similar view as Figs. 9a-b of a larger floor part.
Fig. 11 is a similar view as Fig. 10 on a larger scale, illustrating a floor made of panels as shown in Figs. 7a-c.
Fig. 12 is a perspective view of an alternative configuration of a floor part as shown in Figs. 9a-b.
Figs. 13a-e are cross-sectional views of parts of an alternative embodiment of the fastening system according to the invention.
Figs. 14a-d are similar views as Figs. 13a-c, e of another alternative embodiment.
Figs. 15a-c are similar views as Figs. 14b-d of another alternative embodiment.
Figs. 16a-c are similar views as Figs. 15a-c of another alternative embodiment.
Figs. 17a-i are several perspective and cross-sectional views of parts of still another alternative embodiment of the fastening system according to the invention.
Figs. 18a-b and Fig. 19 are cross-sectional views of the embodiment according to Figs. 17a-i in a non-activated condition and an activated condition, respectively.
Fig. 20 is a cross-sectional view of a part of an embodiment of a first panel during a manufacturing step thereof and Fig. 21 is a similar view as Fig. 20 of the resulting first panel.
Figs. 22 and 23 are illustrative views of packaging different panel types.

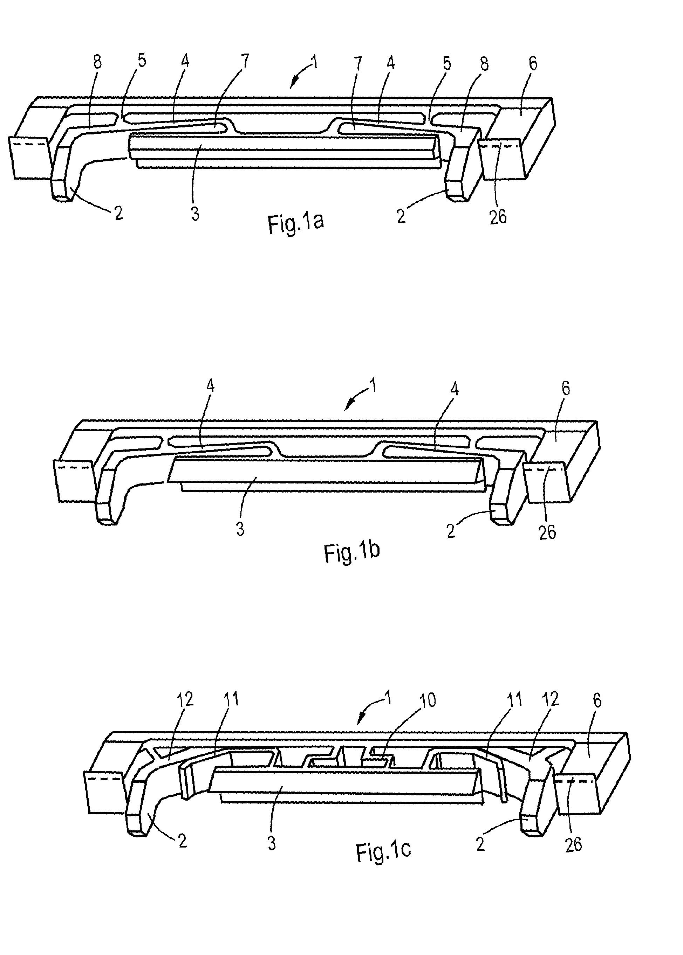

Fig. 1a shows an embodiment of a fastening member 1 of a fastening system according to the invention. The fastening member 1 comprises two activating portions 2 and a locking portion 3. The locking portion 3 and the activating portions 2 are parts of levers 4. The locking portion 3 is fixed to both levers 4 at one side of respective pivots 5 of the levers 4, whereas the activating portions 2 are provided at the opposite sides of the pivots 5. Each pivot 5 includes a pivoting axis which extends substantially perpendicularly to a plane within which the locking portion 3 and the activating portions 2 are displaceable. Both the activating portions 2 and the locking portion 3 are displaceable with respect to a base portion 6 of the fastening member 1. Due to the levers 4 the locking portion 3 is displaced about the pivoting axes upon displacement of the activating portions 2. The direction of displacement of the locking portion 3 on the one hand and the activating portions 2 on the other hand are substantially opposite with respect to each other. The fastening member 1 may be made of an elastic material, for example a plastic such as a thermoplastic or thermosetting material. Alternatively, the fastening member may be made of a metal.

The levers 4 of the embodiment according to Fig. 1a are adapted such that a displacement of the locking portion 3 is larger than displacements of the activating portions 2 upon rotation of the levers 4 at a certain angle. As can be seen in Fig. 1a each of two first lever legs 7 directly connected to the locking portion 3 are longer than each of second lever legs 8 directly connected to the activating portions 2. If desired, levers 4 having other dimensions can be applied easily since they extend in longitudinal direction of the fastening member 1 between the locking portion 3 and the base portion 6.

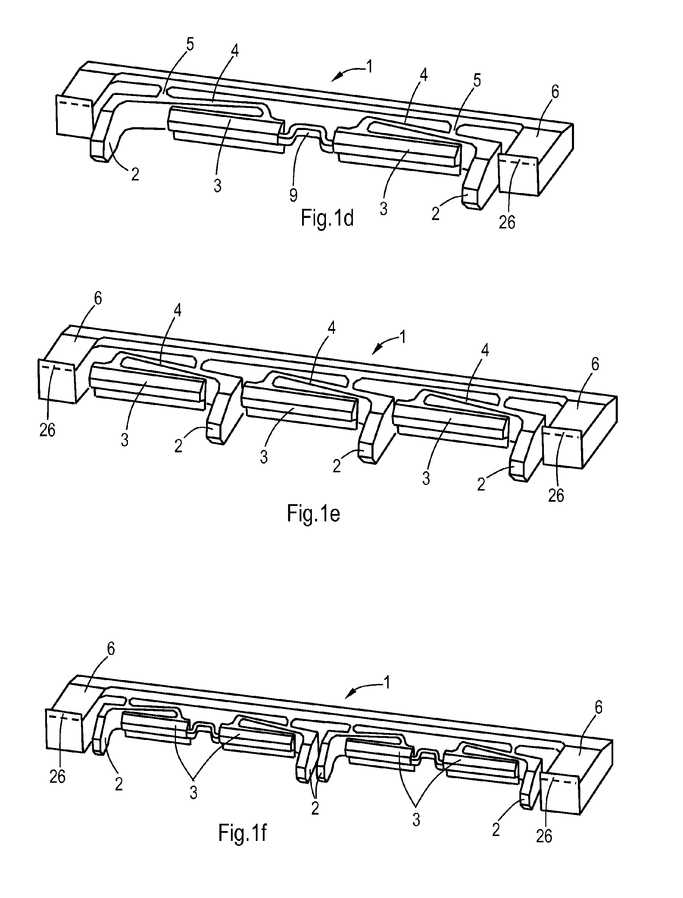

The fastening member 1 as shown in Fig. 1a comprises parallel pivoting axes, whereas the locking portion 3 forms a single piece, which is fixed to both first lever legs 7. This means that parts of the locking portion 3 are moved towards each other or away from each other in a direction parallel to a line through both pivoting axes. In order to avoid possible internal friction the locking portion 3 may be provided with a resilient element 9 between the pivoting axes. This is shown in the embodiment according to Fig. 1d.

Alternatively, the fastening member 1 may be provided with sliding pivots as shown in Fig. 1c. In this embodiment the locking portion 3 is displaceably mounted to the base portion 6 through a spring 10, and press parts 11 of the locking portion 3 are in free contact with levers 12 which are directly connected to the activating portions 2 and mounted to a back side of the base portion 6. When displacing the activating portions 2 to the base portion 6 the levers 12 press against the press parts 11 of the locking portion 3 by pressing against the base portion 6 at the same time. Due to the free contacts between the press parts 11 and the levers 12 internal stress within the locking portion 3 is avoided. Also in this embodiment the locking portion 3 is moved in opposite direction of the activating portions 2 upon activating the activating portions. The shape of a portion of the lever 12 which is in free contact with the base portion 6 as well as the shape of a portion of the lever 12 which is in free contact with the press parts 11 can be adapted so as to influence the transmission ratio between the mutual displacements of the locking portion 3 and the activating portions 2. The portions of the levers 12 which are in free contact with the base portion 6 and the press parts 11 rotate and translate with respect to the base portion 6 such that sliding pivoting axes are created.

Fig. 1e shows an alternative embodiment of the fastening member 1 having three levers 4, three activating portions 2 and three locking portion 3.

Fig. 1f shows an alternative embodiment of the fastening member 1 having two pairs of a combination of two activating portions 2 and a locking portion 3 as shown in the embodiment of Fig. 1d, arranged in series. Of course numerous alternative configurations are conceivable.

The locking portion 3 of the embodiment as shown in Fig. 1b has an inclined lower surface which is steeper than that of Fig. 1a for easily decoupling two panels in which the fastening member 1 is mounted, which will be explained hereinafter.

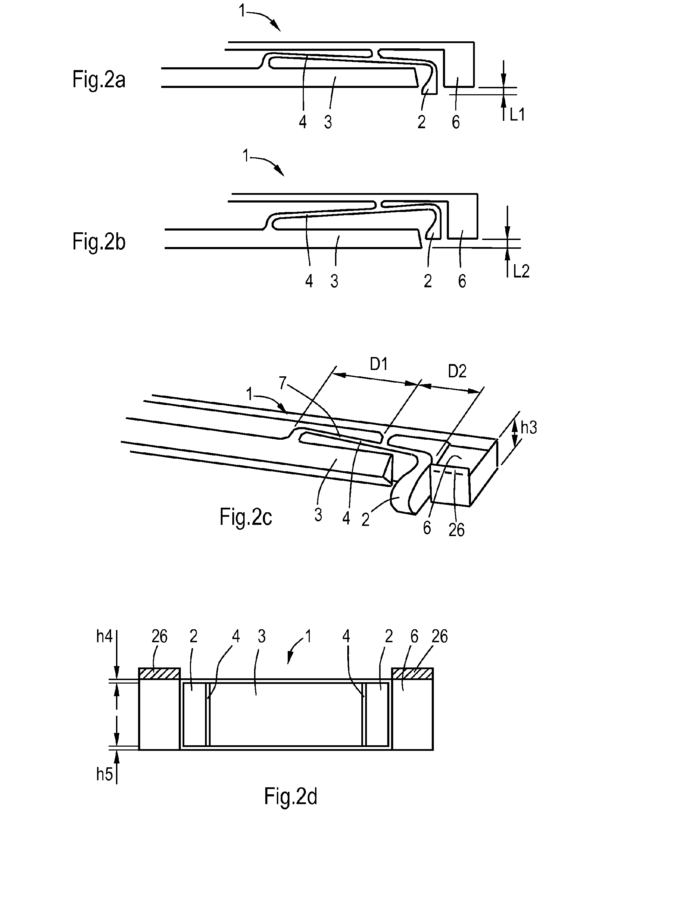

Figs. 2a-b illustrate the functioning of the mechanism of the fastening member 1. Fig. 2a shows a part of the embodiment according to Fig. 1a in a non-activated condition and Fig. 2b shows it in an activated condition. It can be seen that due to the lever 4 upon displacement of the activating member 2 in one direction the locking member 3 is displaced in opposite direction. Fig. 2c shows that a length D1 of the first lever leg 7 is longer than a length D2 of the second lever leg 8. The effect of this is shown in Figs. 2a-b, illustrating a larger displacement L2 of the locking portion 3 than the displacement L1 of the activating portion 2.

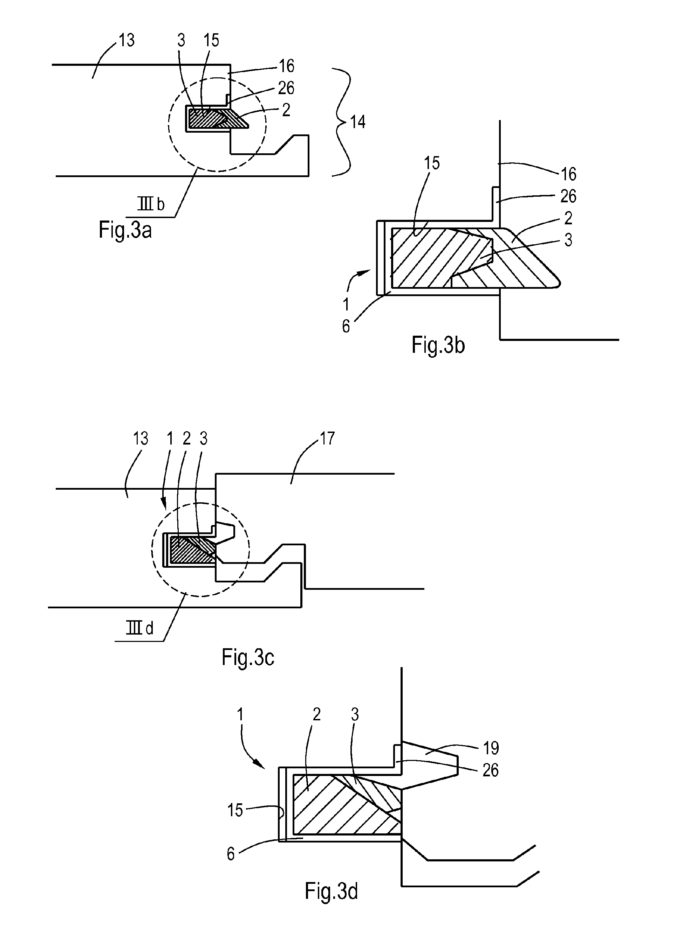

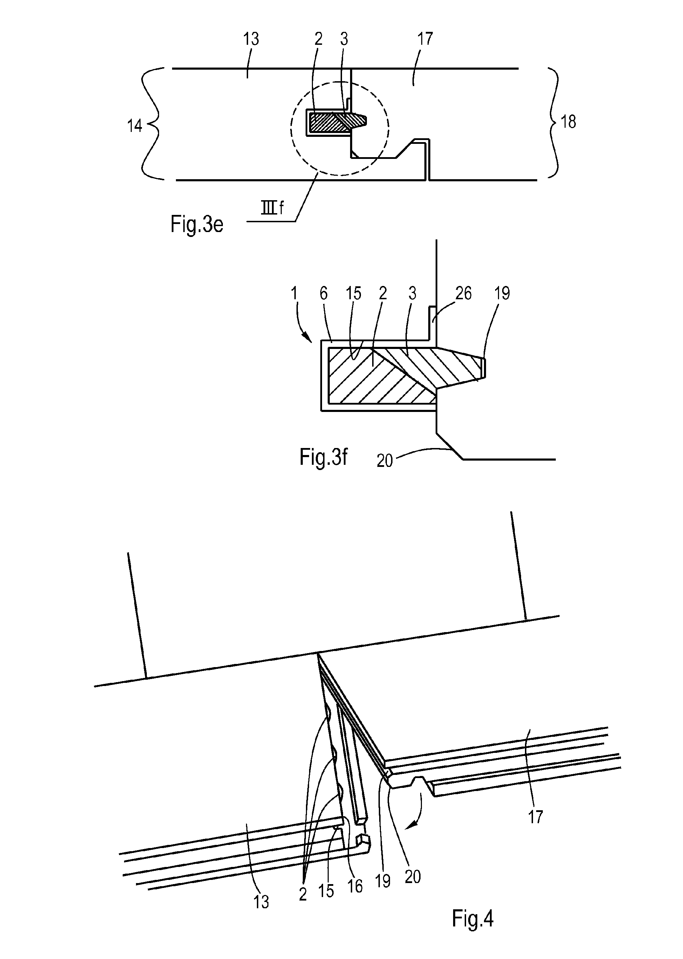

Figs. 3a-f show the operation of a fastening system according to the invention using one of the embodiments of the fastening member 1 as described hereinbefore. Figs. 3a-b show cross-sectional views of a first panel 13 having a first edge 14. The first edge 14 extends between an upper face and lower face of the first panel 13. The first panel 13 can be used as a floor panel and may be a laminated panel having a core of wood-based material, but alternative materials are conceivable, for example a panel of wood, stone, ceramic, vinyl, WPC, LVT. A laminate may be based on HPL, DPL or CPL. A decorative laminate layer on the panel may be arranged by direct pressing, foils, digital pressing, and a top layer may comprise a lacquer or a hot coating or the like.

The first edge 14 is provided with an undercut 15 which accommodates the fastening member 1. The undercut 15 is a groove which extends parallel to the upper face of the first panel 13. The base portion 6 is fixed in the undercut 15. In non-activated condition of the fastening member 1 as shown in Figs. 3a-b the activating portions 2 project from the undercut 15 beyond a first upper lip portion 16 of the first edge 14 located above the undercut 15 and extending substantially perpendicularly to the upper face of the first panel 13. Figs. 3e-f illustrate the fastening member 1 in activated condition. In this case a second panel 17 having a second edge 18 is fastened to the first panel 13 in a direction perpendicularly to the upper faces of the panels 13, 17 through the fastening member 1. The second edge 18 extends between the upper face and lower face of the second panel 17.

In the fastened condition of the panels 13, 17 the first edge 14 and second edge 18 face to each other. In this embodiment the locking portion 3 is inserted in a locking region or groove 19 extending parallel to the second edge 18 and the upper face of the second panel 17. The activating portions 2 are displaced towards the first panel 13 by a downwards movement of the second panel 17, resulting in a movement of the locking portion 3 into the groove 19 of the second panel 17. In this case the part of the groove 19 to which the locking portion 3 is engaged forms the locking region of the second panel 17. More specifically, in this case the locking region comprises opposite walls of the groove 19 in order to fix the positions of the first panel 13 and second panel 17 with respect to each other in upward and downward direction. It can be seen in Figs. 3a-f that the locking portion 3 and the groove 19 are tapered to achieve an appropriate fit between each other. The protrusion depth of the locking portion 3 in the groove 19 can be adapted by means of changing the dimensions of the levers 4 of the fastening member 1.

Figs. 3c-d show an intermediate position of the second panel 17 with respect to the first panel 13 during a fastening movement. It can be seen that the activating portion 2 is displaced into the undercut 15 by the downward displacement of the second panel 17. The locking portion 3, however, is also still within the undercut 15 since the groove 19 is located still too high with respect to the locking portion 3 to receive the locking portion 3. This is possible by elastic deformation of the levers 4 of the fastening member 1.

In Fig. 3a-f it can be seen that a lower surface of the locking portion 3 and a corresponding surface of the groove 19 are inclined such that the second panel 17 can be de-coupled from the first panel 13 relatively easy by an upwardly directed force on the second panel 17 at the second edge 18. The lower side of the locking portion 3 preferably has an inclination of 30-40 ° with respect to the upper surface of the first and second panels 13, 17, for example. The inclined lower surface of the locking portion 3 also facilitates de-coupling of the second panel 17 with respect to the first panel 13 by means of an angling-out motion.

In Fig. 4 the fastening by means of a folding down movement of the second panel 17 with respect to the first panel 13 is illustrated. The activating portions 2 still protruding from the undercut 15 in the first panel 13 can be seen. A lower edge portion 20 at the second edge 18 of the second panel 17 pushes the activating portions 2 in a direction from the second panel 17 to the first panel 13 into the undercut 15 and the locking portion 3 will be displaced from the undercut 15 into the groove 19 of the second panel 17. As a consequence, the first and second panels 13, 17 are fixed to each other in a direction perpendicularly to the upper faces thereof.

It is noted that in the fastening system of the invention the activating portions 2 and the locking portion 3 each only move in one direction upon fastening the first and second panels to each other. In the embodiments as shown above they move in opposite directions with respect to each other within a plane extending parallel to the upper surface of the first panel 13.

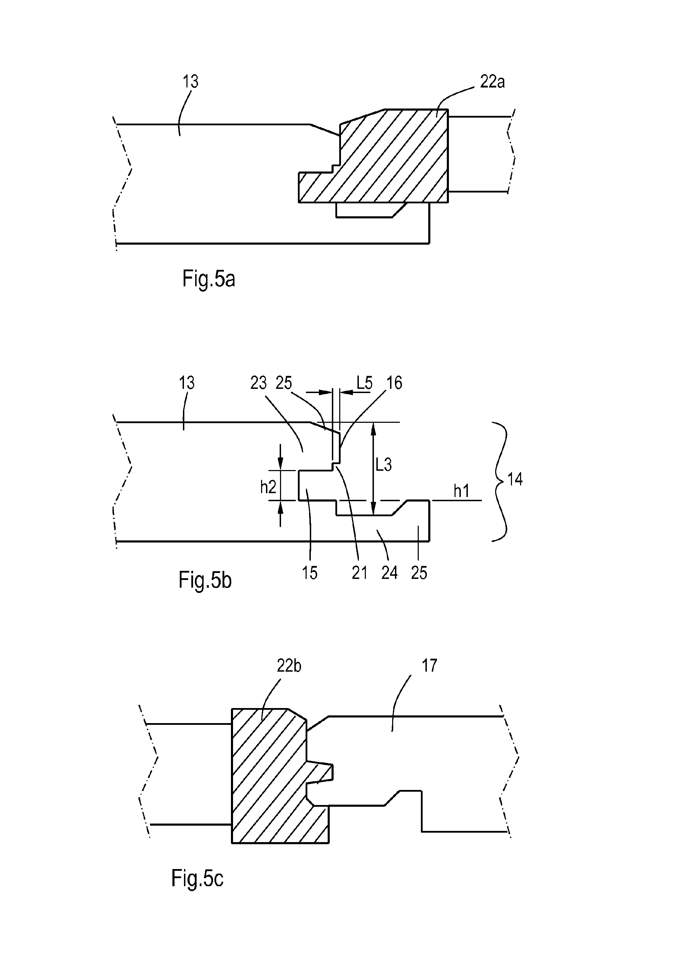

Fig. 5a illustrates a manufacturing step of the first panel 13. A large part of the profile of the first edge 14 is manufactured by a first milling device 22a. Fig. 5b shows the resulting first panel 13 having an undercut 15 in which the fastening member 1 can be accommodated; the width of the undercut 15 is indicated by h2. Comparing the shape of the base portions 6 of the embodiments of the fastening member 1 as shown in Figs. 1a-1f with the shape of the undercut 15 of the first panel as shown in Fig. 5b reveals that the undercut 15 is shaped to fit the fastening member 1 therein. The first edge 14 is also provided with a small recess 21 extending parallel to the undercut 15 and disposed between the undercut 15 and the upper joint portion 16. The depth of the recess 21 is indicated by L5 in Fig. 5b.

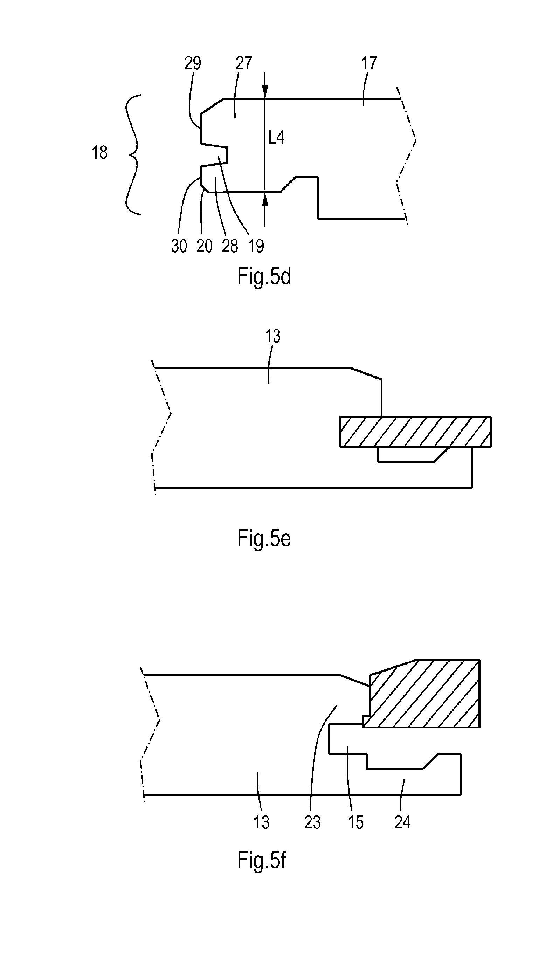

Fig. 5c illustrates a manufacturing step of the second panel 17. A large part of the profile of the second edge 18 is manufactured by a second milling device 22b. Fig. 5d shows the resulting second panel 17 having a locking region or groove 19 in which the locking portion 3 of the fastening member 1 can be engaged. The dimensions indicated by L3 in Fig. 5b and L4 in Fig. 5d are substantially the same such that the upper surfaces of the first and second panels 13, 17 are flush when the first and second panels 13, 17 are fastened to each other.

The first edge 14 of the first panel 13 has a first upper lip 23 and a first lower lip 24. In this embodiment at an extreme edge of the first panel 13 the upper surface thereof is lowered at the first upper lip 23, thus forming an inclined portion with respect to the upper face of the first panel 13 for forming a V-groove when the first and second panels 13, 17 are fixed to each other along the first and second edges 14, 18 thereof.

The first lower lip 24 extends beyond the first upper lip 23 as seen in outward direction of the first panel 13. An end portion of the first lower lip 24 is provided with a first lower lip projection 25 facing upwardly. In the embodiment as shown in Fig. 5b an upper surface of the first lower lip projection 25 lies at substantially a same level h1 as a lower wall of the undercut 15 so as to manufacture the undercut 15 and the first upper lip portion 16 by means of the first milling device 22a in a single step as illustrated in Fig. 5a. Milling the undercut 15 and the first upper lip portion 16 in a single step also provides the opportunity to achieve a high level of accuracy between the dimensions of the undercut 15 and the first upper lip portion 16. This means that when the fastening member 1 would be installed against a bottom of the undercut 15 the positions of the activating portions 2 and the locking portion 3 are accurately defined with respect to the location of the first upper lip portion 16.

The undercut 15 and the first upper lip portion 16 can also be made in two steps, in case the pressure on the first panel 13 by the first milling device 22a becomes too high in a single manufacturing step. Fig. 5e illustrates a separate manufacturing step of the undercut 15 and Fig. 5f illustrates a separate manufacturing step of the first upper lip portion 16 and the recess 21. In a previous manufacturing step a large part of the side at the first edge 14 has already been removed and in the step as shown in Fig. 5f a remainder of the first panel 13 including possible remainders of laminate layers at the upper side of the first panel 13 is more accurately removed. In this case a high level of accuracy between the dimensions of the recess 21 and the location of the first upper lip portion 16 is achieved, whereas the positions of the bottom of the undercut 15 and the first upper lip portion 16 are less accurate with respect to each other due to different steps of milling. This means that when the fastening member 1 is installed in the undercut 15 such that a projection 26 of the base portion 6 which is complementary to the recess 21, fits in the recess 21, the positions of the activating portions 2 and the locking portion 3 are accurately defined with respect to the location of the first upper lip portion 16 as seen in a direction parallel to the upper surface of the first panel and perpendicular to the first edge 14.

As shown in Fig. 5d the second panel 17 comprises a second upper lip 27 and a second lower lip 28 extending above and below the groove 19, respectively. The second edge 18 is provided with a second upper lip portion 29 which extends above the groove 19 and a second lower lip portion 30 which extends below the groove 19. A lower surface of the second lower lip 28 is shaped in such a way that in the fastened condition of the first and second panels 13, 17 it fits to the upper surface of the first lower lip 24. Due to the shapes of the edges 14, 18 of the first and second panels 13, 17 the panels are also fastened in a direction parallel to the upper faces of the panels 13, 17 and perpendicularly to their respective edges 14, 18, in other words in substantially horizontal direction. In a fastened condition the first upper lip portion 16 is in contact with the second upper lip portion 29. The first and second panels 13, 17 are pressed to each other due to the shapes of the upper surface of the projection 25 of the first lower lip 24 and the lower surface of the second lower lip 28 of the second panel 17.

The second lower lip portion 30 is shaped such that during a downwards movement of the second panel 17 with respect to the first panel 17 it stays in contact with the activating portion 2 as shown in Fig. 3c-f. In practice this means that the second lower lip portion 30 extends substantially perpendicularly to the upper face of the second panel 17 just below the groove 19 and inclines inwardly to the second panel 17 further away from the groove 19. The inclined portion of the second lower lip portion 30 coincides with the lower edge portion 20.

The fastening member 1 is located im the undercut 15 such that before fastening the first and second panels 13, 17 to each other the activating portions 2 project beyond the first upper lip portion 16 as seen in outward direction of the first panel 13 (indicated by distance L1 in Fig. 2a) whereas the locking portion 3 is substantially flush with the first upper lip portion 16 or located further inside of the undercut 15, see Fig. 2a.

The dimensions of the width of the undercut 15 as indicate by h2 in Fig. 5b and the height of the base portion 6 as indicated by h3 in Fig. 2c are selected such that the base portion 6 is engaged to the first panel 13 by means of clamping. It is also possible to provide a part of the base portion 6 which is in direct contact with the first panel 13 with projections that increase the resistance between the base portion 6 and the first panel 13. The height of the locking portion 3 and the activating portions 2 are smaller than the height h2 of the undercut 15 such that they can move within the undercut 15 without contacting the walls thereof, see Fig. 2d. In this Fig. the free distance between the activating portions 2 and the locking portion 3 on the one hand and the walls of the undercut 15 on the other hand are indicated by h4 and h5. The free distances h4 and h5 avoid friction between the locking portion 3 and the activating portions 2 on the one hand and the first panel 13 on the other hand such that a force exerted on the activating portions 2 is substantially entirely converted to a force of the locking portion 3 onto the second panel 17.

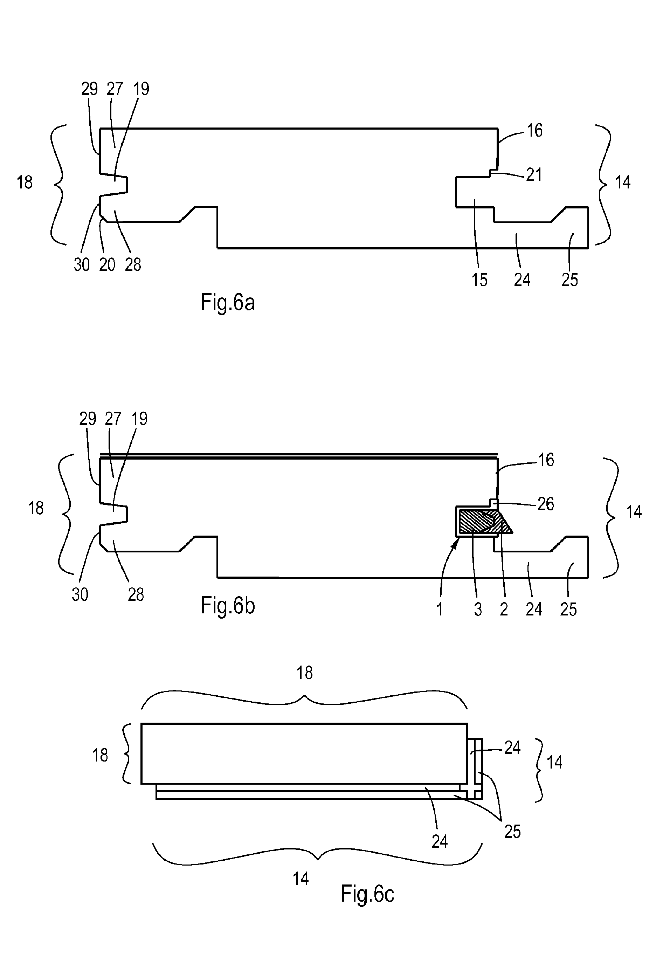

Figs. 6a-b show cross-sectional views of an embodiment of a panel having a first edge 14 and a second edge 18. The shapes of the first and second edges 14, 18 are similar to those shown in Fig. 5a-5f and the same reference signs are used to indicate corresponding parts. As shown in Fig. 6b the undercut 15 in the first edge 14 accommodates the fastening member 1. Fig. 6c shows a plan view of the embodiment of the panel as shown in Figs. 6a-b. As seen from above the panel has a rectangular shape and includes two first edges 14 at a long side and a short side of the panel and two second edges 18 at opposite sides thereof.

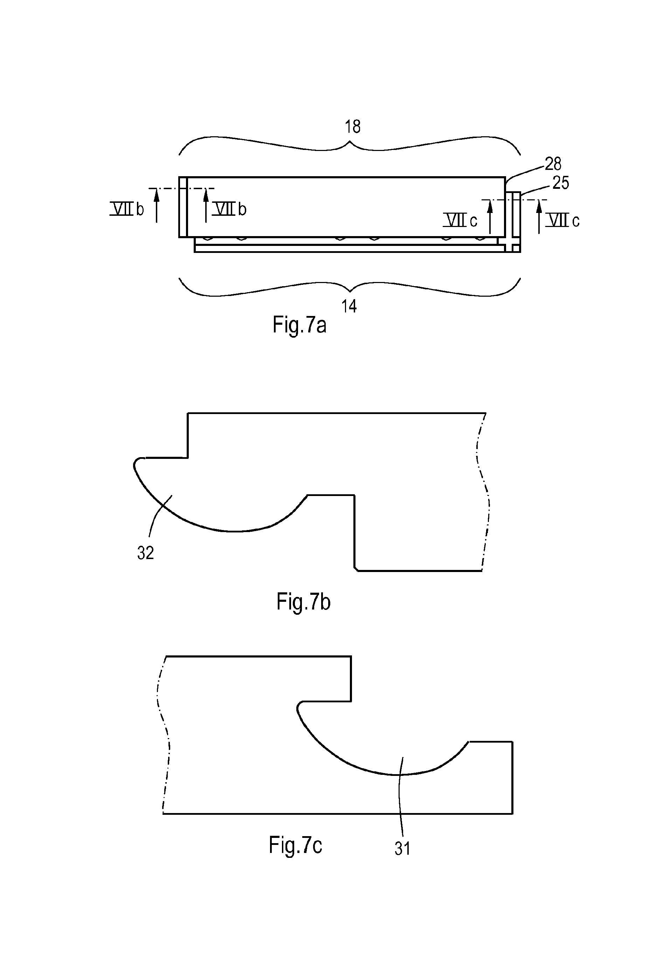

Figs. 7a-c show an alternative embodiment of a panel of which opposite short sides comprise a groove 31 and a tongue 32, respectively, such that the short sides of two similar panels can be fixed to each other by angling the tongue 32 into the groove 31. The opposite long sides of the panel comprise a first edge 14 including three fastening members 1 as described hereinbefore and a second edge 18.

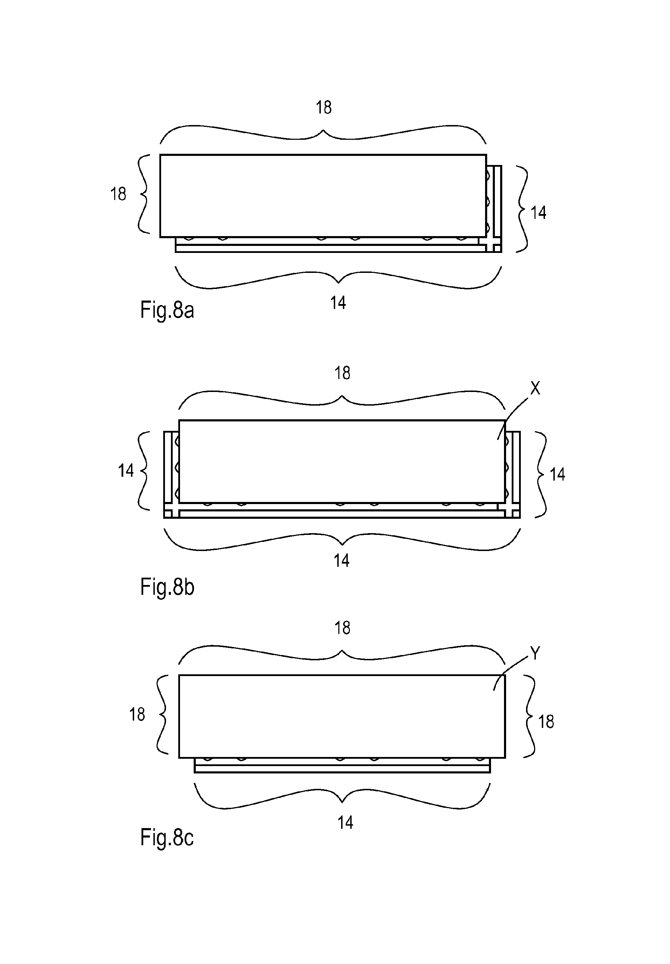

Figs. 8a-c show several embodiments of a panel including fastening members 1. The embodiment according to Fig. 8a is similar to that shown in Fig. 6c; the panel according to Fig. 8b has two short sides including first edges 14, one long side having a first edge 14 and an opposite long side having a second edge 18; the panel according to Fig. 8c has two short sides including second edges 18, one long side having a first edge 14 and an opposite long side having a second edge 18. The different configurations of the panels as shown in Figs. 8a-c can be combined in different ways upon installing a floor.

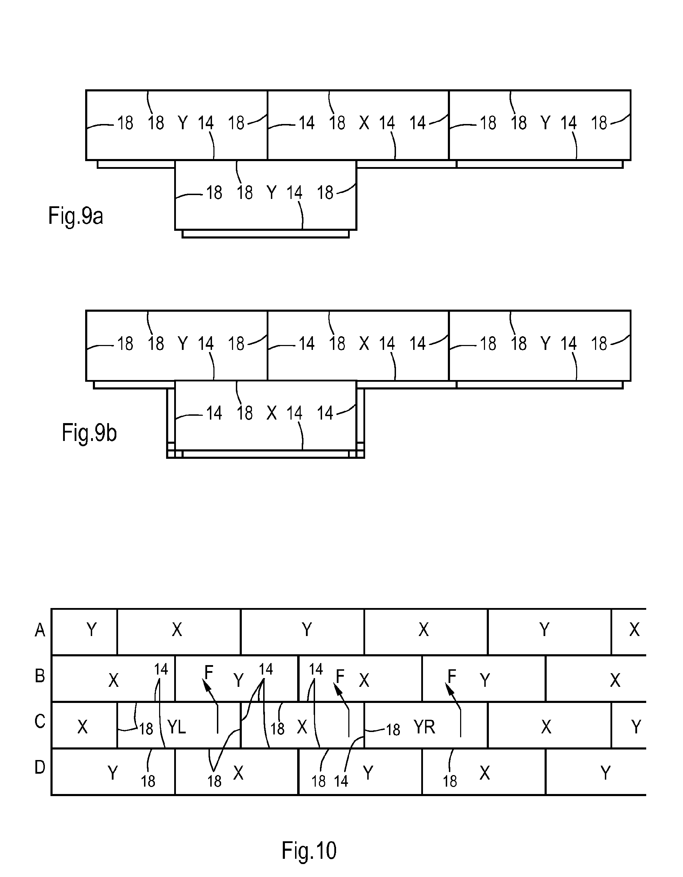

The embodiment of Fig. 8b is indicated by an X-type panel and the embodiment of Fig. 8c is indicated by a Y-type panel. Figs. 9a-b illustrate examples of combining X- and Y-type panels according to embodiments as shown in Figs. 8b and 8c.

In practice it is desired to be able to take a panel out of a floor without the necessity of first removing a plurality of panels from an edge of the floor up to the intended panel. This can be achieved by applying panels having the fastening system according to the invention. Fig. 10 shows a floor comprising rows A-D and illustrates how an X type panel and a Y type panel can be taken out of the row C of the floor. In case of a Y type panel the short sides and one long side thereof have three second edges 18 such that the Y type panel can be lifted at the long side with respect to the adjacent panels in row B and angled out with respect to the adjacent panels in row D at the first edge 14 of the Y type panel. In case of an X type panel in row C of the floor, first the adjacent Y type panels disposed at both short sides of the X type panel, indicated by YR and YL in Fig. 10, have to be removed before the X type panel can be lifted at its second edge 18 and angled out at its long first edge 14.

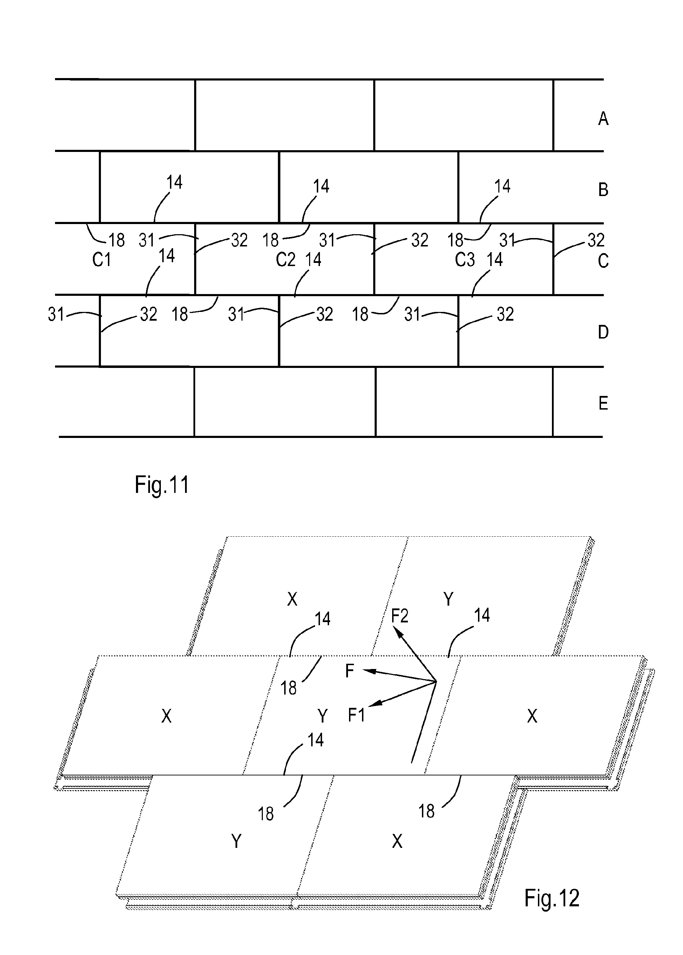

Fig. 11 shows a floor comprising panel rows A-E. The panels applied in this floor embodiment are of a type as shown in Fig. 7a. This means that the short sides of the panels are provided with an angling-angling coupling system and the long sides are provided by the fastening system according to the current invention. Focussing on row C it may be desired, for example, to take out the panel indicated by C2. This can be achieved by exerting an upwardly directed force on the long sides of the panels in row C including second edges 18. The entire row C can be angled out with respect to row D about the long sides including the first edges 14. When placing back the row of panels C1-C3 the panels C1-C3 are first coupled to each other along their respective short sides including the tongues 32 and grooves 31; then the second edges 18 of the panels in row D are fastened to the respective first edges 14 of the panels in the row C by placing the first lower lips 24 of the panels of row C below the second lower lips 28 at the second edges 18 of the panels in row D and displacing the panels in row D downwardly such that rows C and D are fastened to each other. The panels in row C can subsequently be fastened to the panels in row B by displacing the panels in row C at their sides including the second edges 18 downwardly such that the fastening member 1 at the first edges 14 of the panels in row B engage to the groove 19 at the second edges 18 of the panels in row C.

Fig. 12 illustrates that the force exerted on a Y type panel at the second edge 18 thereof, in order to take it out, should be directed transversely to one of the panels, but not necessarily perpendicularly thereto. Such a force on a panel can be created by engaging a suction cup onto the panel and pull the panel upwardly.

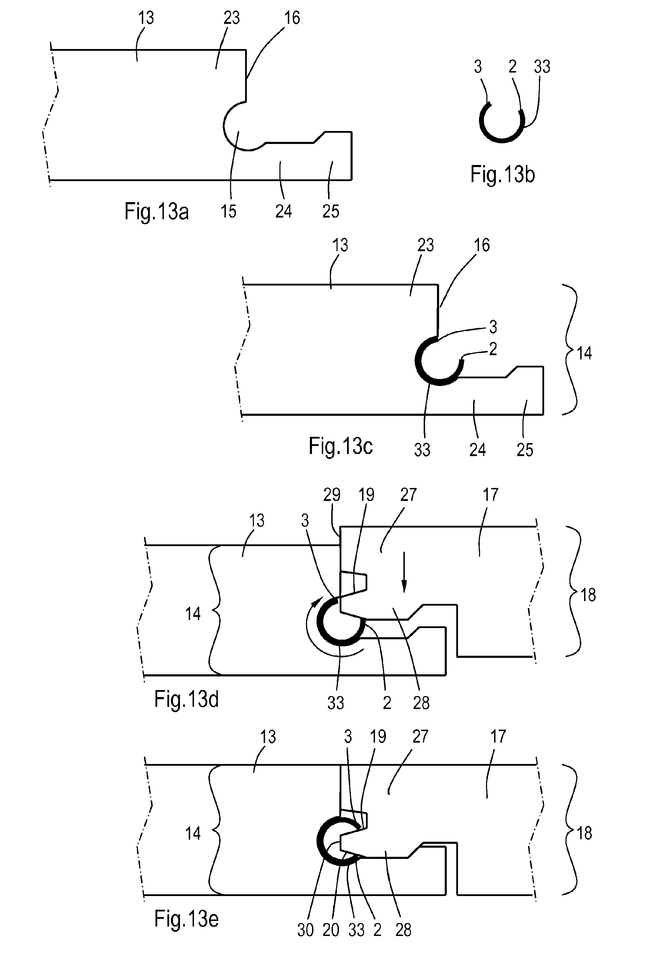

Figs. 13-21 show alternative embodiments of the fastening system according to the invention. Similar to the fastening system as described hereinbefore, the system comprises a fastening member 33 which is displaceable with respect to the first panel 13 by means of rotation about a pivoting axis, but in this case the pivoting axis extends substantially parallel to the first edge 14 and the upper face of the first panel 13. The first and second panels 13, 17 are substantially similar to the panels as described in the embodiments hereinbefore and the same reference signs are used for corresponding parts.

Figs. 13a-e show a cross-sectional view of a relatively simple embodiment of the fastening system. In this case the fastening member comprises a rotatable element 33 which has a substantially part-circular cross-section. The activating portion 2 and the locking portion 3 are provided at ends of the rotatable element 33. The length of the rotatable element 33 may be as long as the length of the corresponding first edge 14 of the first panel 13, but a shorter length is also possible. The undercut 15 is shaped such that the rotatable element 33 fits in the undercut 15. It is, however, not necessary that the entire wall surrounding the undercut 15 touches the rotatable element 33. The pivoting axis about which the rotatable element 33 rotates within the undercut 15 extends at a distance of the wall of the undercut 15 and substantially coincides with a centre line of the rotatable element 33. Fig. 13d illustrates a condition before fastening the first and second panels 13, 17 to each other and Fig. 13e illustrates a fastened condition. It can be seen that upon displacing the second panel 17 downwardly with respect to the first panel 13, the lower edge portion 20 contacts the activating portion 2. As a consequence, the rotatable element 33 turns about the pivoting axis. Since the rotatable element 33 fits in and is rotatable within the undercut 15 it keeps contact with the wall of the undercut 15 and it is not necessary to remove more material of the first panel 13 than the space defined by the circumference of the rotatable element 33 when manufacturing the undercut 15.

The groove 19 in the second panel 17 and the rotatable element 33 are dimensioned such that during the downward displacement of the second panel 17 the locking portion 3 does not oppose that displacement, but at least contacts the lower wall of the groove 19 in the fastened condition. In this case only the lower wall of the groove 19 forms the locking region. Since the rotatable element 33 fits in the undercut 15 and the radius between the pivoting axis and the locking portion 3 is relatively small, a vertical component of the locking force from the locking portion 3 onto the second panel 17 is relatively high. In the embodiments as shown in Fig. 13a-e there may exist a resistance between the rotatable element 33 and the wall of the undercut 15 because of their relatively large contact surfaces. This may be reduced by applying anti-friction means such as a lubricant.

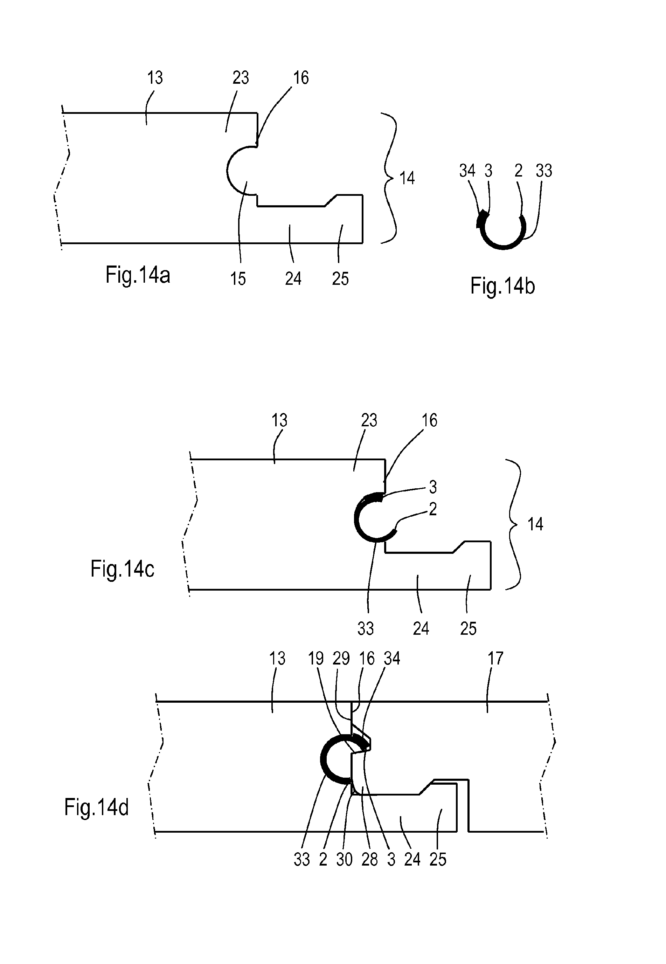

Figs. 14a-d show an embodiment of the rotatable element 33 which is provided with a fixing projection 34 as a holding means for holding the rotatable element 33 with respect to the first panel 13. The fixing projection 34 projects outwardly in radial direction from the outer side of the rotatable element 33 and is disposed at the locking portion 3. Due to the flexibility of the rotatable element 33 the fixing projection 34 creates an elastic deformation of the rotatable element when the fixing projection 34 is still within the undercut 15, as can be seen in Fig. 14c. When the second panel 17 is displaced downwardly with respect to the first panel 13, as shown in Fig. 14d, the fixing projection 34 leaves the undercut 15 and moves in outward direction as seen from the rotatable element 33. As a consequence, the rotatable element 33 engages to the first upper lip portion 16 and cannot rotate backwards, and therefore has a fixed position with respect to the first panel 13.

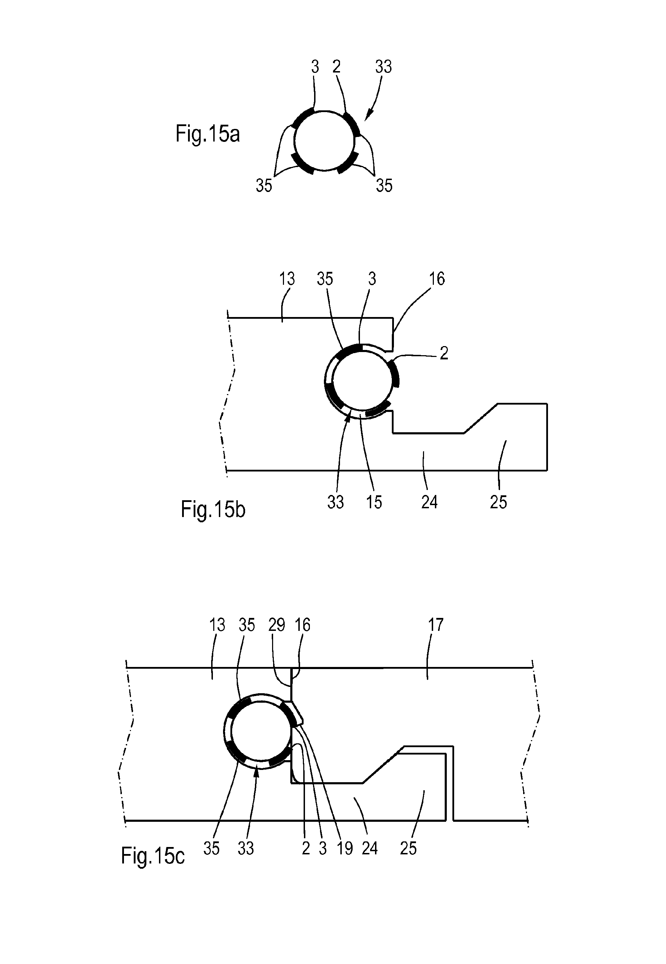

Figs. 15a-c show an alternative embodiment of the rotatable element 33 of which the enclosing surface portion being present within the undercut 15 does not entirely touch the walls of the undercut 15. The rotatable element 33 has a cylindrical shape and comprises contact projections 35 at the outer side of the cylinder. The contact projections 35 that are present within the undercut 15 contact the surrounding wall of the undercut 15. The activating portion 2 and locking portion 3 are provided on two of the contact projections 35.

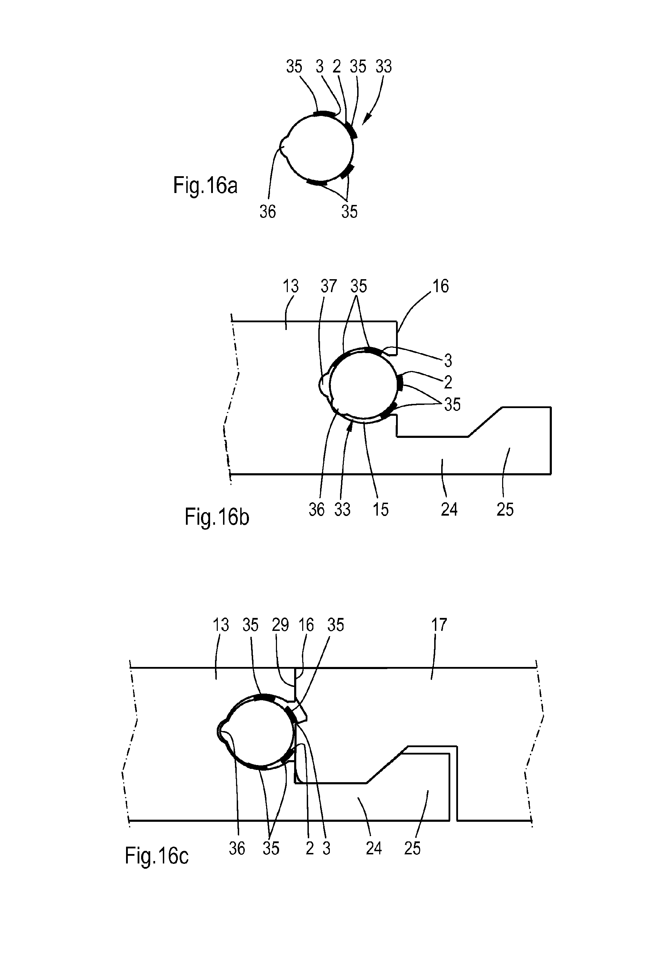

Figs. 16a-c show another alternative embodiment of the rotatable element 33. This embodiment is also provided with contact projections 35, but it also includes a resilient projection 36 which functions as part of a holding means for holding the rotatable element 33 with respect to the first panel 13. The undercut 15 is provided with an undercut recess 37 in which the resilient projection 36 fits. Fig. 16c shows the fastened condition of the fastening system. In this condition the rotatable element 33 is rotated such that the resilient projection 36 is received by the undercut recess 37.

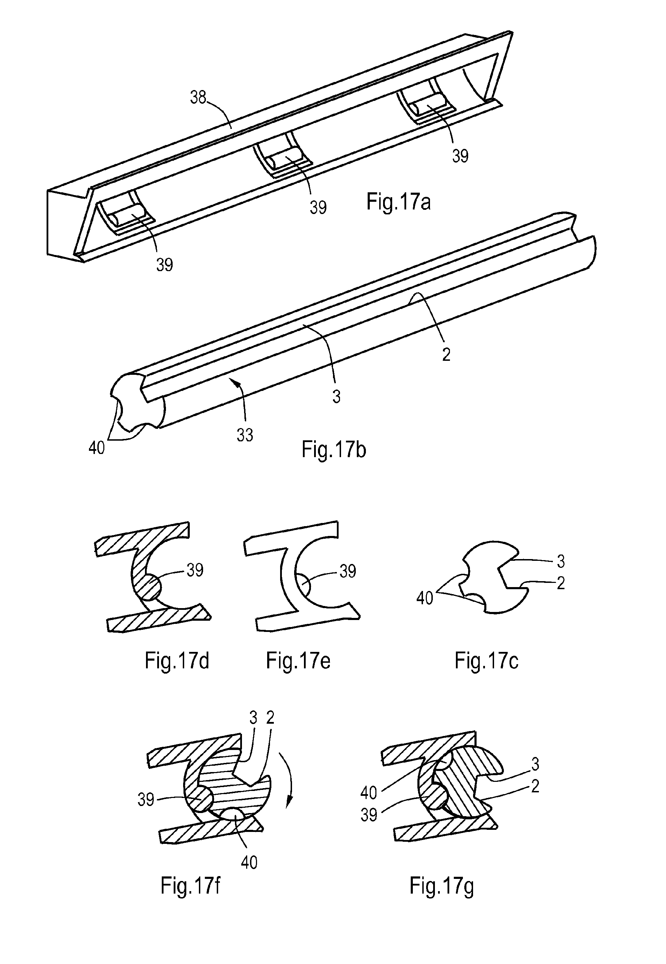

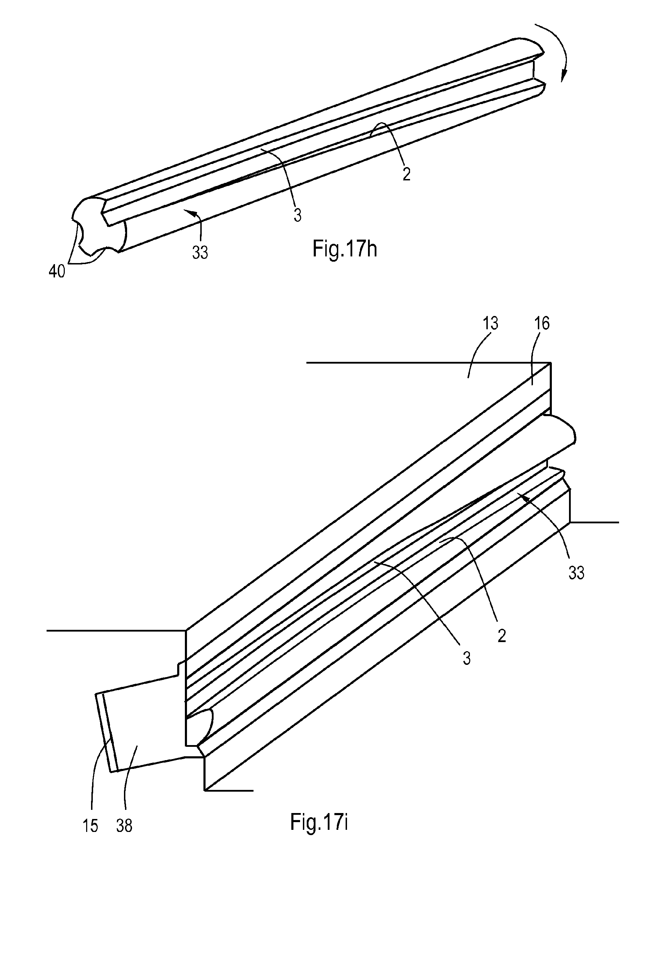

Figs. 17a-i show another alternative embodiment of a fastening system according to the invention. Fig. 17a shows a base portion 38 which fits in an undercut 15 of the first panel 13, see Fig. 17i. The base portion 38 has a cavity in which the rotatable element 33 is receivable, and is provided with springs 39. The springs 39 fit in rotatable element recesses 40 which extend in longitudinal direction of the rotatable element 33, as shown in Fig. 17b. This means that the rotatable element 33 can be fixed with respect to the base portion 38 by means of the springs 39 at two different rotational positions, see Figs. 17f and 17g. Due to the shapes of the springs 39 and the rotatable element recesses 40 this embodiment provides the possibility of decoupling the rotatable element 33 from the base portion 38 upon exerting a rotational force on the rotatable element 33 which exceeds the spring force.

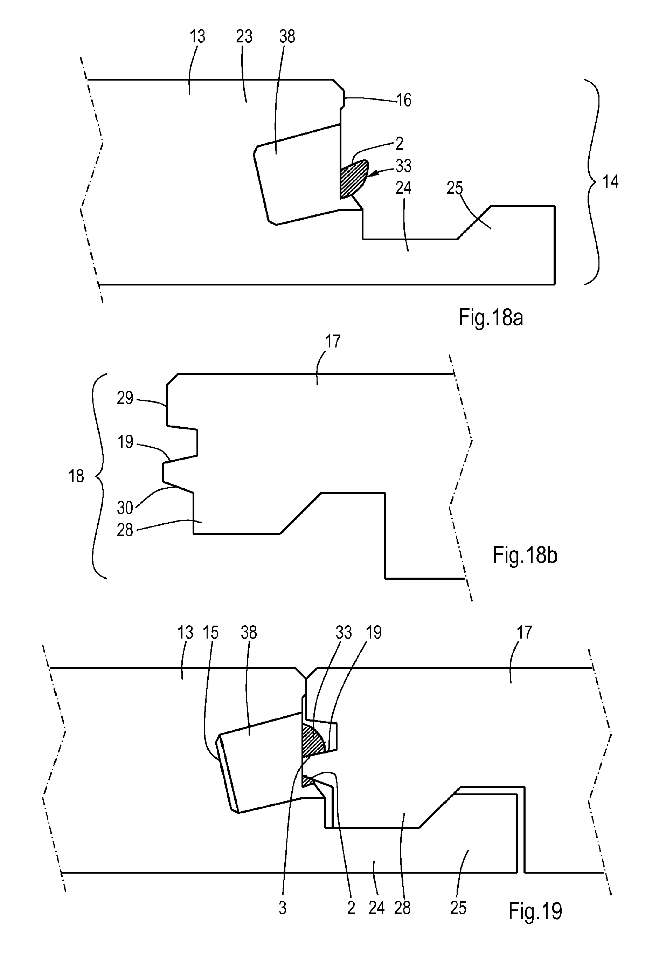

In a preferred embodiment the rotatable element 33 has a torsion resiliency, which is illustrated in Figs. 17h and 17i. Since the springs 39 are located at holding locations which are spaced from each other in a longitudinal direction of the base portion 38 the rotatable element 33 can be rotated about its centre line at a first holding location whereas it remains at a fixed position with respect to the base portion 38 at a second holding location, see Fig. 17i. This is advantageous in case of a folding down movement of a second panel 17 since the locking portion 3 may already move into the opposite groove 19 in the second panel 17, whereas the locking portion 3 at a next holding location still does not touch the second panel 17. Figs. 13a-b illustrate a first and second panel 13, 17 in separated condition, whereas Fig. 19 shows the panels 13, 17 in a fastened condition. It can be seen that the first and second panel 13, 17 are locked to each other in horizontal and vertical direction.

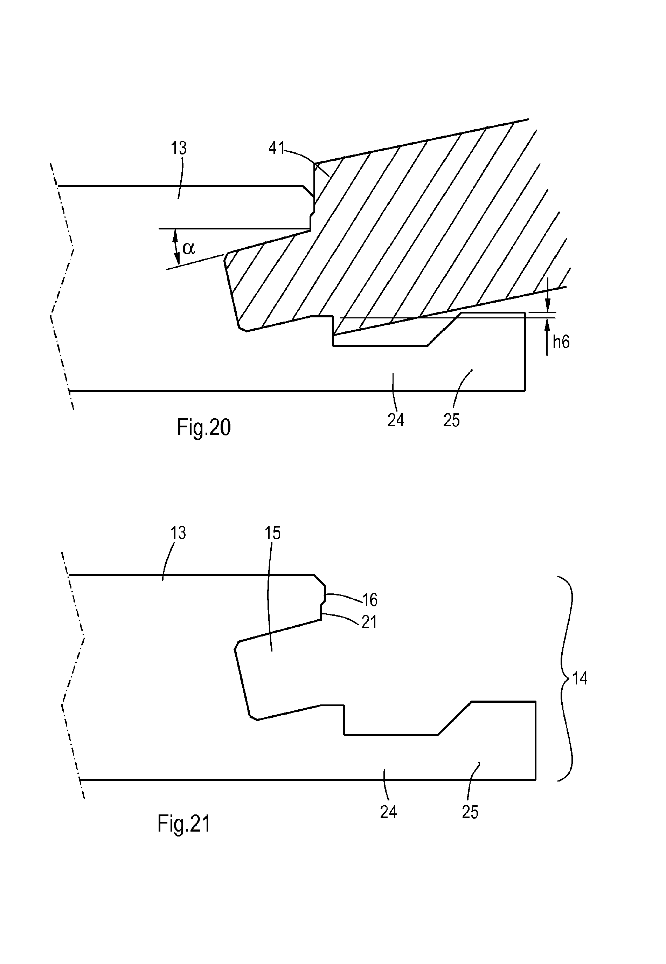

Figs. 20 and 21 illustrate a manufacturing step of the profile of the first edge 14 of the first panel 13. In this case the undercut 15 and the first upper lip portion 16 are manufactured in a single step by the milling tool 41. It is also possible to manufacture the profile of the first edge 14 in two steps as described hereinbefore. In that case the recess 21 forms a positioning reference for accurately locating the base portion 38 with respect to the position of the first upper lip portion 16. Figs. 20 and 21 also show that the undercut 15 is angled by an angle α with respect to the upper face of the first panel 13. As a result the first lower lip projection 25 can have a higher level than a lower wall of the undercut 15, such that the lower lip can be made more rigid, see distance h6 in Fig. 20.

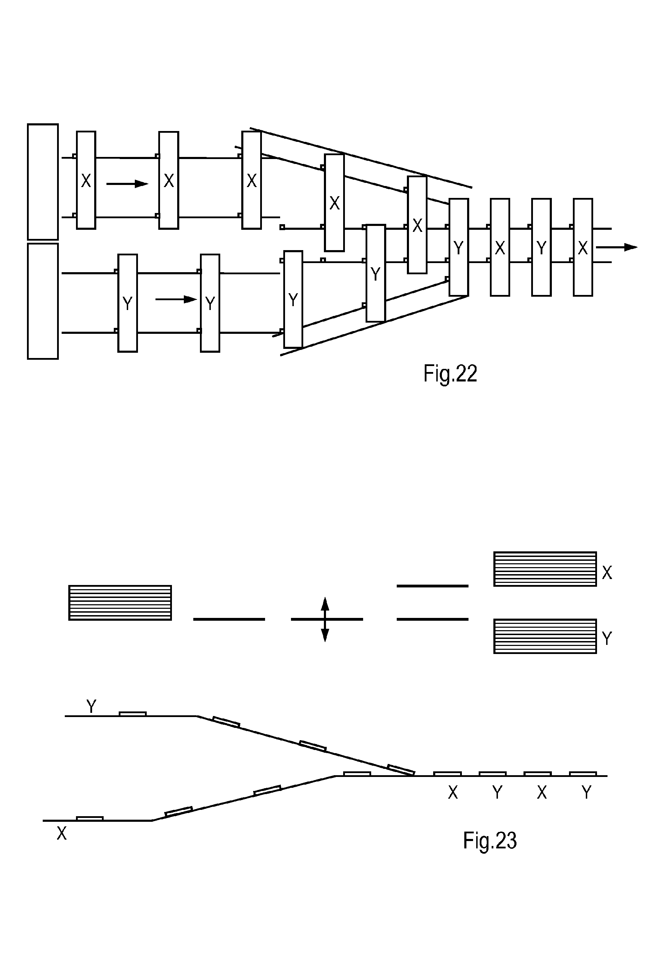

After manufacturing different types of panels, e.g. X type and Y type panels, the resulting panels should be packaged such that a package of panels comprises different types of panels. Two alternative packaging systems are illustrated in Figs. 22 and 23. In Fig. 22 X type panels and Y type panels are supplied by parallel conveyors. The distance between two successive X type panels and between two successive Y type panels is such that at a certain location the panels on the two parallel conveyors can be moved to each other in transverse direction of the conveying direction of the parallel conveyors, such that a series of alternating X and Y type panels arises on a single downstream conveyor. Fig. 23 shows an alternative packaging system in which the conveyors for supplying X and Y type panels merge to a single downstream conveyor, wherein the two supplying conveyors converge to each other in height direction.

From the foregoing, it will be clear that the invention provides an appropriate fastening system for fastening two panels to each other.

The invention is not limited to the embodiments shown in the drawings and described hereinbefore, which may be varied in different manners within the scope of the claims and their technical equivalents. For example, it is possible to apply the fastening system for horizontal fixing of two adjacent panels, which fastening can be achieved by moving the edges of the panels to each other within the planes of the panels.

## Claims

1. A fastening system for fastening two panels (13, 17) to each other, comprising
a first panel (13) having a first edge (14) including an undercut (15) which accommodates a fastening member (1, 33),
a second panel (17) having a second edge (18) including a locking region (19), wherein the first and second edges (14, 18) are positioned adjacent to each other when the panels (13, 17) are fastened to each other by means of the fastening system,
the fastening member (1, 33) comprising a displaceable activating portion (2) and a locking portion (3) which is displaceable with respect to the first panel (13) by means of rotation about a pivoting axis upon displacement of the activating portion (2) such that the locking portion (3) engages the locking region (19) of the second panel (17) when the panels (13, 17) are fastened to each other by means of the fastening system,
**characterized in that** the pivoting axis is spaced from a wall of the undercut (15).

2. A fastening system according to claim 1, wherein the activating portion (2) is also displaceable by means of rotation about the pivoting axis.

3. A fastening system according to claim 2, wherein the activating portion (2) and the locking portion (3) are part of a rotatable element (33) being rotatable within the undercut (15), wherein the outer circumference of the rotatable element (33) comprises a free space between the activating portion (2) and the locking portion (3) in circumferential direction of the rotatable element (33) for receiving the locking region (19) of the second panel (17) and a second lower lip portion (30) of the second panel (17) for engaging the activating portion (2).

4. A fastening system according to claim 3, wherein the undercut (15) and the rotatable element (33) have a substantially part-circular cross-section.

5. A fastening system according to claim 3 or 4, wherein the fastening system is provided with holding means (34, 36, 37, 39, 40) for holding the rotatable element (33) with respect to the first panel (13).

6. A fastening system according to claim 5, wherein the holding means (34, 36, 37, 39, 40) is resilient and adapted such that the rotatable element (33) can be decoupled with respect to the first panel (13) upon exerting a predetermined force onto the locking portion (3) or the activating portion (2).

7. A fastening system according to claim 6, wherein the holding means comprises a resilient protrusion (39) mounted to the first panel (13) and a recess (40) in the rotatable element (33) for receiving said protrusion (39), which protrusion (39) is disposed at a location along the path being followed by the recess (40) upon rotation of the rotatable element (33), or the holding means comprises a resilient protrusion (34, 36) mounted to the rotatable element (33) and a recess (37) in the first panel (13) for receiving said protrusion (34, 36), which recess (37) is disposed at a location along the path being followed by the protrusion (34, 36) upon rotation of the rotatable element (33).

8. A fastening system according to one of the claims 5-6, wherein the rotatable element (33) has a torsion resiliency and the holding means (34, 36, 37, 39, 40) comprise at least two holding locations for holding the rotatable element (33) with respect to the first panel (13), which holding locations are disposed at a distance from each other as seen along the pivoting axis.

9. A fastening system according to one of the preceding claims, wherein the activating portion (2) is intended to be contacted by the second panel (17) upon moving down the second panel (17) with respect to the first panel (13) and wherein the locking portion (3) is intended to fasten the first and second panels (13, 17) with respect to each other at least perpendicularly to an upper face of the panels (13, 17).

10. A fastening system according to claims 1 or 2, wherein the pivoting axis extends transversely with respect to an upper face of the first panel (13).

11. A fastening system for fastening two panels (13, 17) to each other, comprising
a first panel (13) having a first edge (14) including an undercut (15) which accommodates a fastening member (1),
a second panel (17) having a second edge (18) including a locking region (19), wherein the first and second edges (14, 18) are positioned adjacent to each other when the panels (13, 17) are fastened to each other by means of the fastening system,
the fastening member (1) comprising a displaceable activating portion (2) and a locking portion (3) which is displaceable with respect to the first panel (13) upon displacement of the activating portion (2) such that the locking portion (3) engages the locking region (19) of the second panel (17) when the panels (13, 17) are fastened to each other by means of the fastening system,
wherein the activating portion (2) is spaced from the locking portion (3) in a direction substantially parallel to the first edge (14).

12. A fastening system according to claim 11, wherein the fastening member (1) comprises a lever (4) which has a pivoting axis extending transversely with respect to an upper face of the first panel (13), wherein the locking portion (3) and the activating portion (2) are provided on the lever (4) at opposite sides of the pivoting axis.

13. A fastening system according to claim 12, wherein the pivoting axis extends substantially perpendicularly to the upper face of the first panel (13).

14. A fastening system for fastening two panels (13, 17) to each other, comprising
a first panel (13) having a first edge (14) including an undercut (15) which accommodates a fastening member (33),
a second panel (17) having a second edge (18) including a locking region (19), wherein the first and second edges (14, 18) are positioned adjacent to each other when the panels (13, 17) are fastened to each other by means of the fastening system,
the fastening member being a rotatable element (33) provided with an activating portion (2) and a locking portion (3), which rotatable element (33) is rotatable within the undercut (15) about a pivoting axis upon displacement of the activating portion (2) such that the locking portion (3) engages the locking region (19) of the second panel (17) when the panels (13, 17) are fastened to each other by means of the fastening system, and the pivoting axis extends substantially parallel to the undercut (15) and is spaced from a wall of the undercut (15).

15. A panel (13) having an edge (14) including an undercut (15) which accommodates a fastening member (1, 33) for fastening the panel (13) to another panel (17), wherein
the fastening member (1) comprises a displaceable activating portion (2) and a locking portion (3) which is displaceable with respect to the first panel (13) upon displacement of the activating portion (2) and the activating portion (2) is spaced from the locking portion (3) in a direction parallel to the edge (14), or wherein
the fastening member (33) comprises a displaceable activating portion (2) and a locking portion (3) which is spaced from the activating portion (2) and displaceable with respect to the panel (13) by means of rotation about a pivoting axis upon displacement of the activating portion (2), wherein the pivoting axis is spaced from a wall of the undercut (15).
